# FASCICULE DE BREVET EUROPEEN

(11) **EP 3 097 398 B1**
(45) Date de publication et mention de la délivrance du brevet: **03.11.2021**
(21) Numéro de dépôt: 15700744.4
(22) Date de dépôt: 21.01.2015
(51) Int. Cl.: G01N 1/08, A01C 1/02, G01N 1/28, A01H 4/00

(54) **PROCÉDÉ D'ÉCHANTILLONNAGE DE TISSU DE GRAINES**
PROBENENTNAHMEVERFAHREN FÜR KEIMGEWEBE
SEED TISSUE SAMPLING PROCESS

(30) Priorité: 21.01.2014 FR 1450486
(43) Date de publication de la demande: 30.11.2016
(73) Titulaire: Limagrain Europe, 63360 Saint-Beauzire (FR)
(72) Inventeur: MARTINANT, Jean-Pierre, F-63910 Vertaizon (FR); ZHANG, David, 63110 BEAUMONT (FR); ZUBER, Antoine, 63450 Tallende (FR); MAISONNEUVE, Jean-Paul, F-63190 Lezoux (FR)
(74) Mandataire: Lavoix
(86) Numéro de dépôt international: PCT/EP2015/051144
(87) Numéro de publication internationale: WO 2015/110472

(56) Documents cités:
- WO-A1-2013/104801
- WO-A1-2014/071271
- US-A1- 2006 046 264
- US-A1- 2008 131 924
- US-B1- 6 517 561

## Description

La présente invention est relative à un nouveau procédé d'échantillonnage de tissu de graines de taille déterminée, en particulier de maïs et tournesol, avec conservation ou non du caractère germinatif des graines. L'invention concerne plus particulièrement une méthode d'échantillonnage de tissu de graine lorsque la quantité du prélèvement de tissu doit être contrôlée, par exemple dans le cadre d'un génotypage ou de toute méthode d'analyse d'un constituant de la graine.

Comme le rappellent Shibin Gao et al., Mol. Breeding 2008, 22 :477-494, le protocole employé pour obtenir et préparer l'échantillon à partir d'une graine est une étape critique, pouvant affecter l'efficacité de l'extraction de l'ADN, sa qualité et sa quantité, ainsi que la capacité germinative de la graine. Le forage (drilling), méthode courante au laboratoire, permet d'obtenir une poudre de la graine. Cette méthode est cependant longue et fastidieuse et conduit à un échauffement de l'échantillon prélevé. WO 2008/061095 rappelle également la prééminence de cette technique et d'autres inconvénients liés au fait que le prélèvement est une poudre et que les risques de contamination croisée sont élevés.

Gao et al. proposent un système de génotypage à base d'ADN pour la sélection du maïs assistée par marqueur, dans lequel le prélèvement d'albumen est réalisé sur des graines ramollies dans l'eau, à l'aide d'un scalpel. L'embryon ne doit pas être touché et la quantité d'albumen prélevable est limitée entre 20 et 60 mg. La méthode est très délicate à maîtriser et pose un problème de reproductibilité et de standardisation des prélèvements.

En réaction aux tentatives d'automatisation, WO 2008/061095 décrit également un processus manuel pour prélever des échantillons de grains notamment de maïs, ce processus utilisant une pince coupante. La méthode décrite dans cette demande de brevet permet de prélever des échantillons de grains en préservant la viabilité des graines, l'échantillon étant en quantité suffisante pour pouvoir faire différentes analyses, la traçabilité entre l'échantillon et la graine dont il est issu étant assurée. Les auteurs de cette demande précisent que cette méthode manuelle permet de répondre aux contraintes industrielles de façon plus certaine qu'un système d'automatisation coûteux et peu pratique (transport, formation, support, maintenance). Il est vrai que l'automatisation est coûteuse, présente plus de risques de non fonctionnement, et ne permet pas de dupliquer aussi facilement les postes de travail. La méthode manuelle décrite dans WO 2008/061095 permet certainement d'accroître ce pourcentage mais elle ne permet pas de calibrer précisément et de manière reproductible la quantité de matériel prélevé, de plus la quantité de matériel prélevée est relativement importante.

En outre, ces systèmes automatisés décrits par Monsanto par exemple dans EP 2 279 657 par découpe graduelle et progressive (type arasement) de graines délivrées de manière continue par un dispositif d'alimentation, entraînent nécessairement un taux de perte de capacité germinative élevé et EP 2 279 657 précise ainsi un objectif de conserver la germination sur une population de plus de 50% seulement.

Un autre exemple d'automatisation figure dans la demande WO 2010/022289, basé sur un système de découpe au laser. Il est décrit dans cette demande qu'une calibration du prélèvement peut être envisagée grâce à des outils optiques, associés au laser, permettant une résolution spatiale et une calibration fine du prélèvement. Cette technique proche des systèmes utilisés en chirurgie humaine ne peut pas être envisagée à faible coût et donc être multipliée. De plus, aucune information de cadence sur ce dispositif n'est indiquée.

La demande WO 2012/122156 décrit quant à elle, un procédé automatisé de prélèvement d'échantillon de graines, notamment les graines de soja, mettant en jeu un matériau abrasif permettant d'araser la graine. Les graines sont mises en contact du matériau abrasif dans au moins un compartiment. Cependant, cette méthode ne permet pas de supprimer les risques de contamination croisée, ni de calibrer avec précision les quantités d'échantillons prélevées sur les graines. De plus, l'extraction d'ADN à partir de graines entières est laborieuse car l'arasement de graines entières peut provoquer la formation d'une pâte due à la présence d'acides gras dans la graine, comme par exemple dans la graine de tournesol, riche en acides gras. Dans le cas de l'arasement, l'extraction d'ADN nécessite une étape supplémentaire qui est une étape de sous-aliquotage de la poudre de graine obtenue par arasement. Les mêmes inconvénients pour l'extraction d'ADN avec la méthode d'arasement s'appliquent également à la méthode de broyage.

EP 1 508 023 décrit un système de percement de graines en série, dans lequel des graines sont superposées dans des tubes ; plusieurs de ces tubes sont disposés sur un support, puis soumis à l'action de tubes de prélèvement de matière qui viennent perforer les graines superposées dans chaque tube. Ce système ne permet pas de conserver la capacité germinative de la graine après la prise d'échantillon, il s'agit d'un procédé dit destructif. Il n'est en outre adapté qu'à un prélèvement de groupe, et n'est pas apte à garantir des conditions de prélèvement optimales contrôlées, notamment en termes de volume d'échantillon et de localisation du prélèvement.

US2006/0046264 décrit un dispositif comprenant l'arasage de la graine à l'aide de couteaux venant araser la graine de plus en plus profondément. Il peut lui être associé le prélèvement d'une carotte de graine à partir de la surface préalablement arasée. Dans un mode de réalisation, le matériau préalablement arasé est éliminé et seul le prélèvement par carottage est exploité. Ce document décrit donc simplement qu'il est possible de faire un prélèvement par carottage à condition d'avoir au préalable arasé la graine pour former une surface plane. D'autres solutions en accord avec l'état de l'art antérieur sont décrites dans les documents US 6 517 561 B1 et WO 2014/071271 A1.

Un objectif de l'invention est de proposer un procédé de prélèvement simple, très contrôlé, standardisé et reproductible d'une portion de tissu prédéterminée, tant du point de vue quantité que zone de prélèvement, à partir de graines de différents types.

Un autre objectif de l'invention est de proposer un tel procédé qui puisse être appliqué au prélèvement d'un échantillon d'albumen, de cotylédon et/ou d'embryon, en particulier selon que l'on souhaite ou non conserver le caractère germinatif de la graine. Pour une graine monocotylédone le prélèvement sera fait préférentiellement dans l'albumen si l'on souhaite maintenir la viabilité de la graine ; pour une graine dicotylédone, le prélèvement dans un cotylédon pourra également permettre de préserver la viabilité de la graine.

Un autre objectif de l'invention est de proposer un tel procédé qui puisse être appliqué au prélèvement d'un échantillon d'albumen, de cotylédon et/ou d'embryon, en particulier selon le besoin en ADN et selon que l'on souhaite ou pas conserver le caractère germinatif de la graine.

Un autre objectif de l'invention est encore de proposer un tel procédé qui permette d'assurer la traçabilité des échantillons de tissu et des analyses effectuées, par exemple de génotypage par rapport aux graines.

Un autre objectif encore de l'invention est de pouvoir prélever des volumes ou masses de tissu en fonction des besoins d'analyse et déterminable à partir de graines, dans des conditions reproductibles, sur l'albumen, du cotylédon et/ou l'embryon.

Un autre objectif encore de l'invention est de permettre de réaliser, sur une même graine, plusieurs prélèvements, y compris lorsque l'on souhaite conserver la capacité germinative, ce grâce à un bon contrôle du volume prélevé et de la maniabilité et de la précision de l'outil utilisé.

Un autre objectif encore de l'invention est de permettre de recueillir les prélèvements sur une plaque ayant des puits de petite taille, telle une plaque 384 puits, qui correspond aux standard utilisés au laboratoire en matière de génotypage

Un autre objectif encore de l'invention est de permettre d'extraire plusieurs échantillons à partir d'une graine unique ou de plusieurs graines et, la quantité prélevée étant homogène, de permettre de faire des bulks d'échantillons dans un même puits et de faire une extraction directe dans ce puits ou une analyse directement sur l'ensemble du matériel présent dans chaque puits, le calibrage de chaque échantillon assurant la représentativité de chaque échantillon dans ce bulk de façon à répondre aux exigences d'un contrôle qualité.

La présente invention a ainsi pour objet un procédé d'échantillonnage selon la revendication 1 ainsi qu'un procédé d'échantillonnage et analyse de tissu de graine, pour la caractérisation de graine dans le cadre d'un contrôle qualité selon la revendication 3.

Dans la présente demande, l'imbibition d'une graine avec de l'eau peut être réalisée avantageusement avec de l'eau osmosée, notamment de type III. Dans un mode de réalisation particulier, le maïs est imbibé avant prélèvement, pour le prélèvement dans l'albumen notamment. Lors d'un prélèvement dans l'embryon, l'imbibition n'est pas nécessaire en général. Le tournesol peut être prélevé sans imbibition. On préfère travailler sur des grains ayant conservé un degré d'humidité suffisant, typiquement supérieur à 10 ou 15% mais on peut également travailler, jusqu'à 30% d'humidité si le poinçonnage est fait à la récolte, on peut également anticiper la récolte pour la faire avec un degré d'humidité supérieur pour permettre de faciliter ce prélèvement. L'humidité est mesurée à l'aide d'un humidimètre, par exemple un humidimètre Chopin®, modèle While 65 ou par spectroscopie proche infrarouge (NIRS). La durée d'imbibition doit être suffisante pour permettre le prélèvement. Cette durée peut notamment être d'environ 1 h à environ 24 h selon l'état du grain. Suivant une caractéristique, les graines sont placées dans l'eau pendant une durée suffisante entre 3h et 12h pour les imbiber, de préférence durant d'environ 4 à environ 6 h, puis le prélèvement est effectué à l'aide de l'emporte-pièce.

Le prélèvement effectué à l'aide d'un emporte-pièce permet typiquement, à partir de la surface extérieure naturelle de la graine, de découper, emporter, puis libérer une pièce ou portion généralement d'un seul tenant et de volume déterminé de tissu. On peut dire que l'on fait un carottage ou un poinçonnage de la graine, depuis la surface extérieure de la graine, et que l'on produit, à chaque prélèvement, une carotte ou pièce de tissu de volume déterminé.

La présente invention a plus particulièrement pour objet un procédé de d'échantillonnage de tissu de graines pour génotypage, ou un procédé de génotypage de graines, comprenant les étapes suivantes :
- disposer d'une ou plusieurs graines à génotyper,
- optionnellement imbiber d'eau la graine de manière à la ramollir et permettre l'étape suivante,
- effectuer le prélèvement manuel ou semi-automatique d'un volume d'échantillon déterminé à partir de la ou des graines, à l'aide d'un emporte-pièce conçu pour découper, emporter, puis libérer un volume déterminé de tissu, ce volume étant déterminé ; ce volume est notamment déterminé pour permettre une analyse par génotypage,
- placer le prélèvement de tissu d'une graine unique ou de plusieurs graines dans un puits, d'une plaque multipuits de réception d'échantillon, identifié et traçable,
- effectuer l'analyse de génotypage sur le contenu du ou des puits.

L'analyse de génotypage peut être faite sur de l'ADN.

Au lieu d'un génotypage, on peut effectuer l'analyse de n'importe quel constituant et cette analyse peut être faite par toute méthode connue, par exemple analyse biochimique, analyse de protéines, ou recherche de la présence d'une protéine par des anticorps, etc.

Le constituant analysé peut être un marqueur ou un composant de la graine, par exemple huile, graisse, acide nucléique, protéine, hydrate de carbone.

Le procédé peut être appliqué à des graines ayant une certaine taille et une dureté compatible avec le prélèvement par emporte-pièce, sachant qu'il est possible de ramollir les graines préalablement à l'eau. Sont ainsi visées notamment, sans y être limité, les graines de maïs, de tournesol, de blé, d'orge, de haricot, de cucurbitacées, de soja. L'invention peut aussi s'appliquer à des grains de plus petite taille, notamment de la taille des graines de colza, par exemple des graines de colza. L'invention vise donc des graines ayant un diamètre à partir de 1 ou 2 mm environ ou ayant au moins une dimension d'au moins 1 ou 2 mm environ.

Suivant une caractéristique, le prélèvement manuel ou semi-automatique est réalisé de manière à conserver le caractère germinatif de la graine, et, après prélèvement, la graine est placée dans un puits identifié et traçable. Ce puits est avantageusement, indexé au puits de réception de l'échantillon correspondant (de préférence d'albumen ou de cotylédon) qui a été préalablement prélevé et lui-même placé à une étape précédente dans un puits de la plaque multipuits de réception d'échantillon.

Suivant une caractéristique, le volume d'échantillon prélevé est compris entre environ 0,05 et environ 40 mm³, de préférence entre environ 0,25 et environ 10 mm³. Le volume prélevé est adapté à la taille de la graine et au fait que l'on conserve ou pas la capacité germinative de la graine.

Suivant une caractéristique, la masse d'échantillon prélevée est comprise entre environ 0,05 mg et environ 40 mg, de préférence entre environ 0,25 mg et environ 10 mg. La quantité prélevée est adaptée à la taille de la graine et au fait que l'on conserve ou pas la capacité germinative de la graine.

Ce volume et/ou cette masse d'échantillon pour chaque graine peut être prélevé en une fois ou en plusieurs fois.

Suivant une caractéristique, l'emporte-pièce est un poinçon, de préférence un poinçon ayant un embout emporte-pièce produisant une carotte notamment cylindrique et ayant un diamètre compris entre environ 0,3 et environ 5 mm, de préférence entre environ 2 et environ 4 mm.

Suivant une caractéristique de l'invention, on traverse la graine à l'aide de l'emporte-pièce, pour prélever le tissu. L'application de l'emporte-pièce fait que son embout ou tige traverse la graine de part en part, de sorte que le volume ou la masse de tissu est déterminée par le diamètre de la tige ou embout et l'épaisseur de la graine à l'endroit du prélèvement. On pourra parler dans ce cas de poinçonnage produisant une carotte ou pièce de tissu. Pour les graines d'épaisseur plus importante le prélèvement pourra ne pas être fait de part en part mais correspondra à la longueur de la tige ou de l'embout. On pourra parler dans ce cas de carottage. Connaissant les graines prélevées, il est aisé de déterminer le volume ou la masse de tissu prélevé et donc aussi de choisir les dimensions, notamment le diamètre, de la tige ou embout. Le volume ou la masse de tissu peut également être déterminé par le diamètre de la tige ou embout et par la longueur du prélèvement correspondant à la longueur de la tige de l'embout Cette longueur de dispositif ou de prélèvement (carotte ou pièce de tissu) est préférentiellement de 2 mm environ mais peut être adaptée et aller de 0.3 mm environ à 10 mm environ, typiquement d'environ 1 à environ 3 mm.

Suivant une caractéristique, à l'aide de l'emporte-pièce, on prélève de l'albumen ou du cotylédon ; de l'embryon ; ou de l'albumen et de l'embryon ou du cotylédon et de l'embryon.

Suivant une caractéristique, on utilise un emporte-pièce, comportant un corps, de préférence en matériau plastique, agencé de manière à pouvoir être tenu à la main ou fixé à un support, un embout emporte-pièce, de préférence en métal tel que l'acier ou en céramique, relié à ce corps et agencé de manière à pouvoir être enfoncé dans la graine en y découpant un volume de tissu prédéterminé, et des moyens permettant de libérer ce volume de tissu. L'embout emporte-pièce peut être démonté du corps pour être affuté et/ou être nettoyé. Le corps de l'emporte-pièce est avantageusement dimensionné pour une manipulation manuelle aisée, permettant à l'utilisateur d'appliquer une force suffisante pour trancher le tissu. Le poids de l'emporte-pièce peut aussi être déterminé dans ce but. La longueur de prélèvement peut avantageusement être ajustable.

Le déclenchement de la découpe par enfoncement de l'embout peut être réalisé manuellement, soit par mouvement de l'ensemble emporte-pièce, soit par actionnement manuel de l'embout au moyen d'une manette adaptée. Le déclenchement peut aussi être motorisé lorsque le prélèvement est semi-automatique. La libération du volume d'échantillon peut aussi être réalisée manuellement, par actionnement manuel d'un dispositif d'éjection coulissant dans l'embout au moyen d'une manette adaptée. La libération peut aussi être entraînée par un dispositif ou moyen dont l'opérateur assure le déclenchement, le dispositif d'éjection pouvant être motorisé, soumis à une force élastique (par exemple ressort) ou par jet d'air, lorsque le prélèvement est semi-automatique. Enfin, on peut aussi prévoir un mode automatique dans lequel l'opérateur actionne l'emporte-pièce par des moyens commandés ou des moyens électroniques, tant lors de la phase de découpe, la graine étant alors maintenue dans un réceptacle dans l'orientation voulue pour permettre la découpe de l'échantillon souhaité, que de la phase de déplacement de l'emporte-pièce et/ou du puits, puis de la libération de l'échantillon de tissu dans le puits.

Une autre structure d'emporte-pièce qu'il est possible d'adapter au prélèvement de tissu d'une graine est décrite dans US 7,093,508.

Suivant une caractéristique, à l'aide du poinçon et du dispositif d'éjection, l'échantillon de tissu est libéré et placé dans un puits d'une plaque multipuits.

Le volume de tissu emporté en une fois par l'emporte-pièce peut correspondre à la quantité de tissu nécessaire à l'analyse. En variante, le volume de tissu pour l'analyse est prélevé en plusieurs fois à l'aide de l'emporte-pièce à partir de la même graine.

Suivant une caractéristique, plusieurs échantillons, notamment de 5 à 30, de préférence de 10 à 20 échantillons de tissu sont successivement découpés à partir d'autant de graines, puis placés dans un même puits, notamment d'une plaque multipuits, chaque prélèvement représentant un volume de tissu prédéterminé ou substantiellement prédéterminé. Par substantiellement, on entend une variation restant dans l'acceptable, notamment inférieure ou égale à 20, 15, 10 ou 5% en poids ou en volume.

En variante on dispose de plusieurs graines (notamment de 5 à 30, de préférence de 10 à 20), on prélève plusieurs (notamment de 2 à 5) échantillons de tissu de chacune des graines, et l'on place l'ensemble des échantillons dans un même puits, notamment d'une plaque multipuits.

L'analyse peut alors être effectuée séparément sur le mélange de tissu présent dans chaque puits. Cette analyse vise notamment à rechercher la présence ou l'absence d'un ou plusieurs caractères en phase avec l'analyse à effectuer.

Il y a notamment deux applications importantes à un tel bulk ou pool de grains ou de prélèvements : l'analyse de l'identité variétale d'un lot de semence et l'analyse de la pureté d'un lot de semences. On peut citer encore l'analyse de diversité génétique. L'analyse de l'identité variétale d'un lot de semence permet d'identifier les allèles majoritaires à chaque locus marqueur, pour un échantillon représentatif de la population. La préparation d'un bulk de X semences permet de diluer un hors type ou allèle minoritaire dans cette population afin qu'il soit indétectable par rapport à la sensibilité du test qui est supérieure à 1/X. L'analyse de la pureté d'un lot de semences permet de vérifier sur un échantillon d'un lot de semence qu'il y a bien une pureté variétale et l'on va focaliser l'analyse sur la recherche de potentiels hors types.

Suivant une caractéristique, on utilise dans le procédé de l'invention une machine comportant la combinaison d'une plaque multipuits amovible et d'un receveur d'échantillon, l'un des deux au moins étant mobile, la plaque et le receveur sont asservis entre eux pour permettre le déplacement de la plaque et/ou du receveur dans des conditions faisant coïncider un puits de la plaque et le receveur.

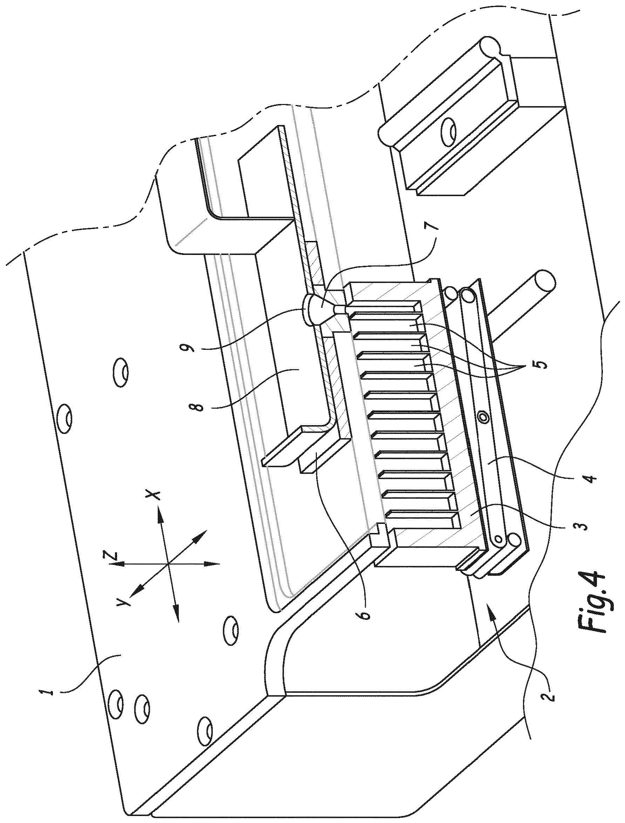

Suivant une caractéristique, l'échantillon est libéré dans le receveur depuis l'emporte-pièce. Suivant une autre caractéristique, plusieurs échantillons sont successivement libérés dans le receveur depuis l'emporte-pièce. Suivant une caractéristique, que l'on retrouve dans l'exemple de réalisation illustré par la figure 4, le dépôt à partir de l'emporte-pièce peut se faire indirectement dans le receveur, ce qui signifie que le dépôt se fait initialement dans un réceptacle qui sera, au moment opportun, mis en regard du receveur. Dans un mode particulier de l'invention l'emporte-pièce manuel ou semi-automatique est placé au-dessus du receveur de façon que l'échantillon tombe directement dans le receveur d'échantillon.

Suivant une caractéristique, la machine comporte en outre un dispositif électronique d'asservissement du receveur et des puits de la plaque et d'enregistrement de la position de chaque échantillon ou groupe d'échantillons dans un puits de la plaque de réception d'échantillon après que le receveur a délivré le ou les échantillons dans le puits sous-jacent.

Suivant une caractéristique, le procédé utilise un receveur, éventuellement amovible ou interchangeable, qui comprend un orifice ayant, au moins en sa partie supérieure destinée à recevoir l'échantillon, une forme conique ou évasée, dont le grand diamètre ou ouverture est situé côté supérieur, et l'ouverture inférieure de l'orifice est dimensionnée pour avoir un diamètre inférieur ou égal, de préférence inférieur, au diamètre d'un puits de la plaque multipuits. L'interchangeabilité permet d'adapter le diamètre de l'ouverture inférieure de l'orifice au diamètre du puits, de prendre en compte les caractéristiques du tissu prélevé telles que le volume ou la masse de tissu, la nature du tissu), d'adapter le matériau utilisé dans lequel est réalisé le receveur en fonction de la nature de l'échantillon ou d'adapter la pente de l'orifice du receveur en fonction de la forme de l'échantillon. Par conséquent, l'opérateur peut changer de receveur en fonction de la plaque multipuits qu'il utilise et des caractéristiques du tissu analysé.

Ce receveur peut être réalisé en un matériau nettoyable entre deux prélèvements, notamment lorsque le prélèvement est réalisé sur des tissus plus difficiles à manipuler comme des graines riches en huile. Le receveur peut également être amovible afin de réaliser un nettoyage complet du dispositif pour éviter les problèmes liés à l'encrassement du dispositif.

Suivant une caractéristique, le procédé prévoit l'actionnement de moyens permettant de faire passer un ou plusieurs échantillons du receveur au puits, ces moyens étant actionnés soit manuellement après positionnement du receveur et du puits, soit par des moyens électroniques une fois le bon positionnement réalisé. Notamment, on utilise un dispositif de transfert du receveur au puits, de préférence commandé manuellement ou par un processeur. On peut utiliser des jets d'air ou des poussoirs, actionnés manuellement ou commandés.

Suivant un mode de réalisation, pour la mise en œuvre du procédé, on utilise une machine qui comporte en outre une unité agencée de manière à pourvoir recevoir un réceptacle pour les graines dont on a préalablement prélevé un échantillon de tissu, ce réceptacle à graines étant de préférence une plaque multipuits ou un support ou bande adhésive ou comportant des zones adhésives. L'utilisateur peut disposer de fiches ou de fichiers informatiques permettant de connaître la position d'une graine et de son échantillon sur chacun de leurs supports.

Suivant un autre mode de réalisation, pour la mise en œuvre du procédé, on utilise une machine qui comporte en outre une unité agencée de manière à pourvoir recevoir un réceptacle pour les graines dont on a préalablement prélevé un échantillon de tissu, ce réceptacle étant de préférence une plaque multipuits ou un support ou bande adhésive ou comportant des zones adhésives, et les moyens électroniques décrits ci-dessus qui sont conçus pour permettre de relier informatiquement un échantillon déposé dans son puits de plaque de réception d'échantillon à sa graine déposée sur ce réceptacle à graines.

L'unité permettant de recevoir les graines peut être identique à celle permettant de récolter l'échantillon et munie d'un receveur ayant une taille adaptée à la graine. Dans ce mode de réalisation les deux receveurs pourront être distincts ou bien regroupés dans un dispositif unique.

Suivant une caractéristique, après prélèvement de l'échantillon, les graines sont disposées sur un ruban adhésif, de préférence un ruban biodégradable, et apte à permettre la germination, en des emplacements indexés par rapport aux échantillons prélevés sur elles. On effectue ensuite la mise en culture en plaçant le ruban sur ou dans le substrat de culture. Il est possible, avant mise en culture, d'éliminer les graines correspondant aux échantillons n'ayant pas passé favorablement le test (graines non conformes). Il est possible aussi de ne pas effectuer ce tri à ce moment, mais simplement de ne pas tenir compte des plants issus des graines non conformes et/ou de procéder à un tri ultérieurement après une période de culture.

Suivant une caractéristique, après prélèvement de l'échantillon, les graines sont disposées dans les puits indexés d'une plaque multipuits.

Dans un mode de réalisation, le procédé est appliqué au génotypage de graines tout en conservant la capacité germinative, et le procédé comporte alors les étapes suivantes :
- disposer d'une ou plusieurs graines à génotyper,
- optionnellement imbiber d'eau la graine de manière à le ramollir et permettre l'étape suivante,
- effectuer le prélèvement manuel ou semi-automatique d'un volume d'échantillon déterminé dans l'albumen de la ou des graines, à l'aide d'un emporte-pièce conçu pour découper, emporter, puis libérer un volume déterminé de tissu, ce volume étant déterminé pour permettre l'analyse de génotypage, placer le prélèvement de tissu d'une graine unique ou de plusieurs graines dans un puits identifié et traçable,
- effectuer l'analyse de génotypage,
- déterminer le ou les échantillons ayant le ou les caractères génomiques recherchés,
- optionnellement semer la ou les graines sélectionnées qui correspondent à ces échantillons ayant le ou les caractères génomiques recherchés,
- optionnellement semer toutes les graines en gardant leur identification afin de leur associer leur donnée de génotypage.

Dans un mode de réalisation, le procédé est appliqué au génotypage de graines, sans la nécessité de conserver leur capacité germinative (par exemple dans le cadre d'un contrôle d'un lot de semences ou pour la création variétale (breeding) lorsque plusieurs graines identiques sont disponibles et qu'il est possible d'en sacrifier au moins une pour le génotypage (exemple d'haploïdes doublés).
- disposer d'une ou plusieurs graines à génotyper issues d'un lot de semences,
- optionnellement humidifier les graines de manière à les ramollir et permettre l'étape suivante,
- effectuer le prélèvement manuel ou semi-automatique d'un volume d'échantillon déterminé dans l'albumen et/ou l'embryon des graines, à l'aide d'un emporte-pièce conçu pour découper, emporter, puis libérer un volume déterminé de tissu, ce volume étant déterminé pour permettre l'analyse par génotypage, placer chaque prélèvement de graines dans un puits ou placer les prélèvements de tissu des graines dans un même puits, les puits étant identifiés et traçables,
- effectuer l'analyse par génotypage sur chaque échantillon ou sur le pool d'échantillon,
- déterminer si chaque échantillon ou le pool d'échantillon a le ou les caractères génomiques recherchés,
- valider ou non le lot de semences en fonction des résultats de l'étape précédente.

Suivant une caractéristique, après le prélèvement, les graines sont séchées, de préférence à température ambiante ou dans un four, et stockées en attendant d'être semées. Les graines peuvent également être protégées avec un traitement adéquat pour éviter toute perte de viabilité de la graine dans le cas où on conserve la partie embryon, par exemple avec un traitement chimique type fongicide ou un traitement de type enrobage.

Le procédé de l'invention permet de faire du génotypage moléculaire pour caractériser des individus (plante ou semence) à l'aide des marqueurs moléculaires (séquence d'ADN). Il peut être utilisé pour aider les sélectionneurs à évaluer et sélectionner des individus ayant des combinaisons alléliques favorables au cours du processus de création variétale (breeding), d'une part, et à la production des semences pour le contrôle qualité des semences (identité et pureté génétique), ou pour une analyse de diversité génétique de populations d'autre part. Dans le cadre de la sélection variétale, le génotypage va pouvoir porter sur l'analyse d'un nombre limité de marqueurs notamment si l'on dispose de marqueurs informatifs (SNP, insertion ou délétion associées à un caractère). Par contre dans certains cas, il sera intéressant d'étudier de nombreux marqueurs pour chaque échantillon prélevé et dans ce cas une technologie du type AXIOM® d'Affymetrix (Santa Clara, CA, USA), cette méthode est basée sur l'utilisation d'une puce comprenant une haute densité de sondes permettant de caractérisé l'ensemble de ces SNP simultanément.

Le prélèvement par poinçon en destructif : on ne garde pas les semences sur lesquelles le prélèvement a été réalisé. Ce type de prélèvement est notamment pratiqué dans le cadre de contrôle qualité des semences, par exemple maïs et tournesol ou de création variétale (breeding) mais lorsque plusieurs graines identiques sont disponibles et qu'il est possible d'en sacrifier au moins une pour l'analyse, e.g. le génotypage (exemple d'haploïdes doublés).

En contrôle qualité, la méthode utilisée peut être la méthode Kaspar de KBioscience (LGC Group, Teddington, Middlesex, UK) permettant d'identifier des marqueurs de type SNP. Un set de marqueurs de 10 à 14 marqueurs en fonction des espèces peut être utilisé sur chaque échantillon et peut permettre de caractériser le lot de semence, la présence de l'ensemble de ces marqueurs sur la plante permet de vérifier la pureté variétale d'un lot. Cependant d'autres marqueurs de type microsatellites, RFLP, RAPD peuvent également être étudiés à partir de l'ADN extrait, à partir des pools d'échantillons suivant cette méthode.

Dans le cadre de la production d'organisme génétiquement modifié (OGM), le contrôle qualité peut également s'appliquer pour vérifier l'absence ou la présence d'un trait OGM dans un lot de semences. La méthode utilisée peut être la polymerase chain reaction (PCR) quantitative pour vérifier l'absence de trait OGM dans un lot de semences, en réalisant cette PCR sur un pool d'échantillon obtenu suivant la méthode. Cette PCR peut être réalisée par la méthode Kaspar de KBioscience, mais d'autres méthodes connues de l'homme du métier peuvent être utilisées. On parlera dans ce cas d'analyse par génotypage même si un seul caractère est recherché.

Le prélèvement par poinçon en non-destructif : on doit conserver les semences sur lesquelles le prélèvement a été réalisé. Ce type de prélèvement est notamment pratiqué dans le cadre du génotypage pour l'aide à la sélection de caractères d'intérêts ou à la sélection génomique sur le maïs et tournesol par exemple. Après le génotypage, les individus correspondant aux profils recherchés ou attendus seront implantés dans les champs pour des investigations phénotypiques ou pour la poursuite du schéma de sélection.

Les plaques utilisées sont avantageusement d'un format courant, par exemple format 96 ou 384 puits. L'analyse moléculaire pour chaque individu peut être de type monoplex (1 marqueur à la fois) ou multiplex (plusieurs marqueurs à la fois).

Dans le processus de certification des semences nécessaire à leur commercialisation, des contrôles qualité doivent être réalisés : certification des semences commerciales, on doit réaliser des contrôles qualité des semences (pureté physique, absence de corps étranger, l'aptitude à la germination, la teneur en eau, l'identité et la pureté génétique, etc.). Le génotypage moléculaire peut donc utiliser un jeu de marqueurs bien défini sur chaque espèce (10-20 marqueurs par exemple) pour le contrôle d'identité et de la pureté génétique de la production des lots de semences.

Dans un processus de contrôle d'identité, on réalise une empreinte génétique sur le lot de semences destiné à la mise au marché qui doit correspondre à l'identité de la variété inscrite, l'analyse est réalisée sur un bulk ou lot de quelques semences ou sur quelques semences en individuel ; on réalise plutôt un prélèvement destructif.

Dans un processus de contrôle de pureté génétique, on analyse un nombre important de semences, typiquement 96 ou 192 semences, en individuel ou en bulk, pour détecter les impuretés éventuelles (pollinisation étrangère, autofécondation, ou mauvais mélanges lors de la récolte et traitements en usine) ; on réalise plutôt un prélèvement destructif.

L'utilisation de bulks peut aussi être préconisée pour faire une analyse de diversité génétique, si l'on s'intéresse à une population donnée l'analyse en bulk permettra de vérifier le niveau de divergence ou d'identité à l'intérieur de cette population. Cette méthode peut notamment être utilisée pour les espèces autogames pour vérifier le niveau résiduel d'hétérogénéité dans une population à chaque étape de fixation du matériel.

Le procédé est aussi adapté au génotypage pour aider à la sélection variétale (breeding). La création des nouvelles variétés par la sélection conventionnelle passe par (1) croiser des plantes génétiquement différentes et (2) sélectionner les individus potentiellement intéressants (meilleur rendement, résistance aux parasites, tolérance aux stress abiotiques, meilleure qualité, etc.). Historiquement, cette sélection était faite uniquement au champ par l'œil et grâce à l'expertise du sélectionneur. L'apparition du marquage moléculaire dans la sélection végétale a modifié de façon sensible ce procédé. De nombreux traits tels que la résistance à un pathogène sont maintenant associés à des marqueurs moléculaires, d'où le développement de la sélection assistée par marqueur moléculaire.

Le génotypage moléculaire intervient donc à plusieurs niveaux dans le processus de sélection variétale, notamment pour des approches d'analyse de diversité, d'identification de régions de génome impliquées dans des variations de caractères d'intérêt, de sélection de caractère oligogénique ou de caractère polygénique.

L'invention va être maintenant décrite plus en détails à l'aide de modes de réalisation pris à titre d'exemples non limitatifs et se référant aux figures.

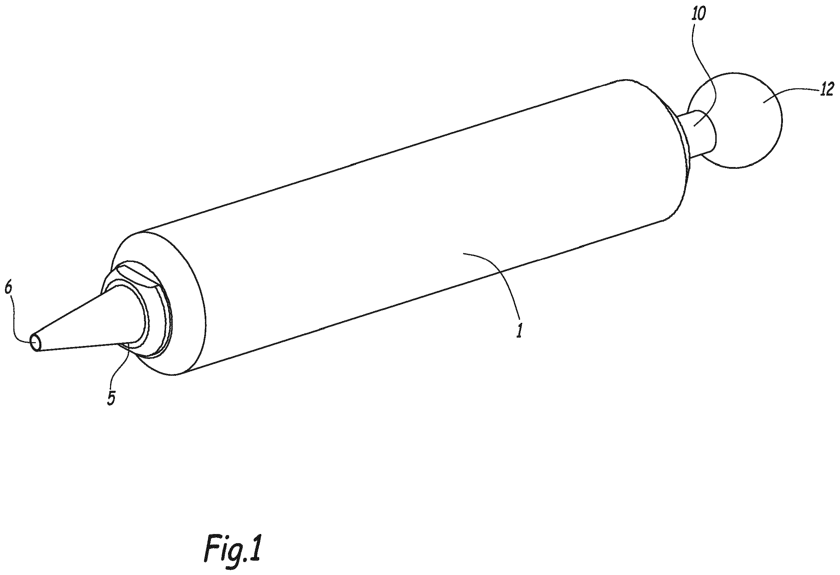

La figure 1 représente une vue d'ensemble de l'emporte-pièce.
La figure 2 représente une coupe longitudinale de l'emporte-pièce en position d'éjection de l'échantillon prélevé.
La figure 3 représente une coupe longitudinale de l'emporte-pièce en position de prélèvement.
La figure 4 représente un échantillonneur.
Les figures 5 et 6 représentent l'intensité relative de fluorescence pour les marqueurs 14 et 6 pour les bulks de 5 graines et de 10 graines.
La figure 7 représente les hauteurs des plantes (en mm) en moyenne et leurs écarts-types.

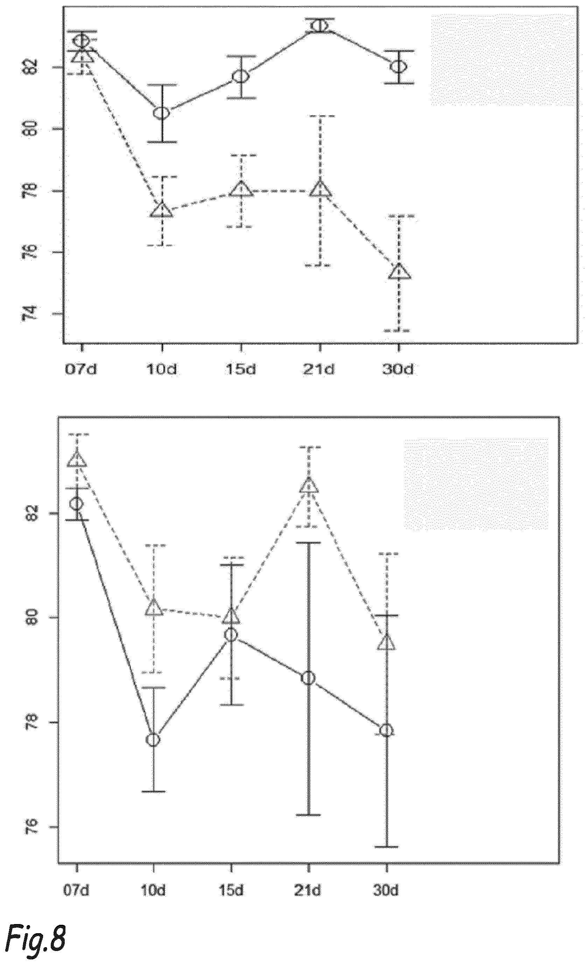

La figure 8 représente (en ordonnée) des effectifs de germination en nombre (84 grains par modalité) après poinçonnage et stockage variable en chambre froide (de 7-10-15-21 et 30 jours, noté respectivement 07d, 10d, 15d, 21d, 30d en abcisse). A : comparaison des effectifs de germination pour une lignée cornée et pour une lignée dentée (les deux types de lignées sont poinçonnées et stockées au froid) ; B : comparaison des effectifs de germination pour la moyenne des plantes cornées et dentées (poinçonnées et stockées au froid, notées modA6) et les plantes témoins (non poinçonnées mais stockées au froid).
La fiigure 9 présente le pourcentage de germination des graines à 3 semaines après semis, pour la moyenne des 11 lignées étudiées dans différentes conditions. En ordonnée, pourcentage de germination, en abscisse, durée d'imbibition en heures et diamètre de poinçon en mm).

### Exemple 1 : Emporte-pièce

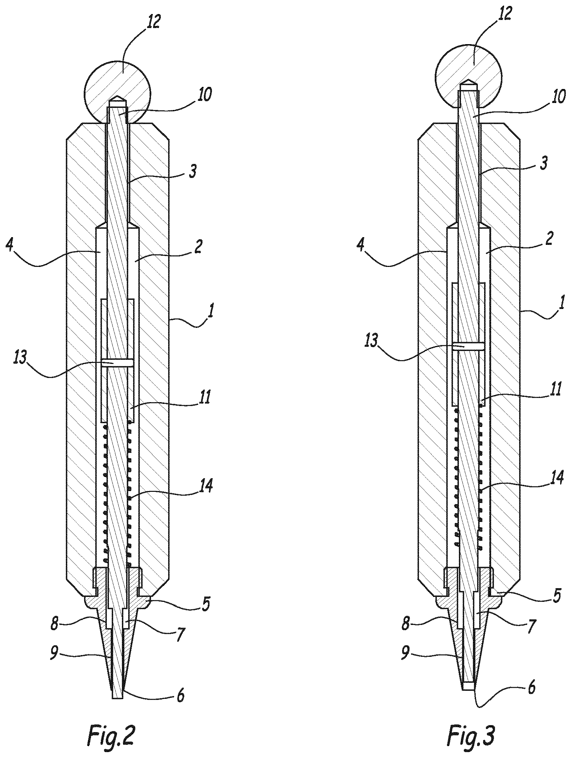

L'emporte-pièce décrit dans les figures 2 et 3, comprend un corps ou poignée 1, mesurant de préférence environ 11,5 cm de long et réalisé en polyéthylène de haute densité (PEHD). L'intérieur de ce corps 1 comprend une cavité creuse cylindrique 2 s'étendant tout le long du corps 1 de l'emporte-pièce. La cavité 2 présente dans sa partie haute 3, un diamètre d'environ 6 mm sur environ 2,5 cm de long et, dans sa partie basse 4, un diamètre d'environ 11 mm sur environ 9 cm de long. A ce corps 1 est fixé un embout emporte-pièce 5 qui vient se loger en partie dans la cavité creuse cylindrique 2. Cet embout emporte-pièce 5 est de préférence de forme conique et de préférence en acier traité au durcissant qui comprend une embouchure 6 de diamètre fixe et qui comprend une cavité creuse cylindrique 7. La cavité 7 possède dans sa partie haute 8, un diamètre d'environ 5,5 mm sur une longueur d'environ 1,5 cm et dans sa partie basse 9, un diamètre correspondant au diamètre de l'embouchure 6 sur une longueur d'environ 1,5 cm. Une tige pleine 10, de préférence réalisée en laiton et s'étendant au moins tout du long de l'emporte-pièce, est logée dans les cavités 2 et 7. La tige 10 est légèrement plus longue que l'ensemble corps 1 et embout emporte-pièce 5. Le diamètre de la tige 10 varie en fonction des différents diamètres des parties 3 et 9 et est sensiblement inférieur aux diamètres de ces parties afin qu'il puisse coulisser sans problèmes de frictions à l'intérieur des cavités 2 et 7. Un guide 11 fixé à cette tige 10 est situé en partie centrale dans la cavité creuse interne 2 et permet de centrer la tige 10 dans les cavités 2 et 7. La tige 10 est prolongée dans sa partie la plus large, à l'extrémité du corps 1, par une sphère 12. Le guide 11 est fixé à la tige 10 par une goupille 13. Un ressort 14 est situé dans la cavité 2 autour de la tige 10 entre le guide 11 et l'embout emporte-pièce 5.

L'emporte-pièce peut avoir deux positions, l'une qui est la position utilisée pour le prélèvement selon la figure 3 où la tige 10 va être en retrait par rapport à l'embouchure 6 d'une longueur réglable ou préréglée, par exemple d'environ 2 mm (un dispositif non représenté limitant le mouvement de la tige 10 dans la direction opposée à l'embout). L'emporte-pièce dans cette position va pénétrer dans la graine à poinçonner sur une profondeur adaptée au type de graine, par exemple de 2 mm. L'autre position utilisée selon la figure 2 permet l'éjection de l'échantillon prélevé par l'emporte-pièce par simple pression sur la sphère 12.

La quantité de matériel prélevée avec un poinçon de 2mm de diamètre a été mesurée sur un échantillon de 20 graines de semence hybride de maïs. Le prélèvement est fait en traversant la graine de part en part. La masse prélevée est en moyenne de 9,2 mg.

La même expérience a été conduite sur trois lots de semences de tournesol ces lots étant choisis de façon à représenter des phénotypes graines différents, 10 fragments de graines ont été utilisés pour chaque prélèvement. Les résultats présentés dans le tableau suivant sont la moyenne de trois pesées :

**Tableau 1. Masse moyenne prélevée au moyen d'un poinçon de 2mm de diamètre sur différents types de matériels**

| Type de matériels | Masse moyenne en mg du prélèvement avec un poinçon de 2 mm de diamètre (écart type en mg) |
|---|---|
| Lignée ― petits grains | 4,9 (+/- 0,4) |
| Lignée ― gros grains | 5,0 (+/- 0,4) |
| hybride | 7,4 (+/- 0,4) |

### Exemple 2 : Echantillonneur :

La Figure 4 montre un échantillonneur 1 comprenant un logement 2 de réception d'une plaque multipuits 3, le système permet d'utiliser différents types de plaques et notamment des plaques d'épaisseur différente, telles que des plaques 96 puits et des plaques 384 puits. Le moyen 4 permet d'adapter la hauteur du support des plaques selon l'axe Z en fonction de l'épaisseur de celle-ci. Deux vérins non représentés dans la figure 2 de la plaque multipuits 3, permettent le déplacement en translation de la plaque multipuits 3 suivant au moins deux axes X et Y. Les puits de la plaque sont indiqués avec la référence 5. L'échantillonneur comporte une plaque supérieure 6 située au-dessus du logement 2 et cette plaque 6 comporte un receveur 7 en forme générale d'entonnoir avec une partie conique supérieure et une partie cylindrique inférieure, le dispositif est conçu pour pouvoir accueillir plusieurs types d'entonnoirs ayant un diamètre en sortie différent et adapté au diamètre du puits associé à cet entonnoir. L'échantillonneur comprend des moyens moteurs et de commande, non représentés, permettant de placer un puits 5 de la plaque 6 en dessous du receveur 7. Une tirette 8 est disposée au-dessus de la plaque 6. Elle est percée d'un orifice conique 9 dont le diamètre inférieur est sensiblement égal au diamètre du receveur 7 à sa partie haute. Cette tirette 8 est déplaçable manuellement en translation selon l'axe X afin de pouvoir faire coïncider le receveur 7 et l'orifice 9. Dans l'un des modes de fonctionnement de cet appareil, l"orifice 9 est cependant décalé par rapport au receveur 7 lorsque l'on vient déposer un ou plusieurs échantillons de tissu sur la plaque 6, dans l'espace délimité par l'orifice 9. La tirette 8 est ensuite déplacée pour faire coïncider l'orifice 9 et le receveur 7 à la verticale du puits 5 présélectionné. Une fois l'échantillon distribué, la tirette 8 est déplacée pour écarter l'orifice 9 du receveur 7. Dans un mode préféré de fonctionnement de ce dispositif, le mouvement de plaque 8 permet d'actionner le système de contrôle de l'appareillage qui va identifier le prélèvement comme effectué, la plaque multipuits 3 est ensuite déplacée pour disposer un autre puits 5 sous le receveur 7, ce déplacement est préférentiellement automatisé et contrôlée par le logiciel de traçabilité associé au dispositif.

### Exemple 3 : Concentration et rendement d'ADN extrait sur maïs

Une série d'essais a été réalisée sur le prélèvement par un poinçon de diamètre 2 mm sur l'albumen ou l'embryon avec des variétés issues de groupe hétérotiques différents, le prélèvement traversant la graine de part en part. Pour faciliter la réalisation du prélèvement, le grain est préalablement imbibé dans de l'eau pendant 4 heures lorsque le prélèvement est effectué dans l'albumen. On n'imbibe pas lorsque le prélèvement est fait dans l'embryon. Les tissus prélevés et placés dans les puits de la plaque sont broyés à l'aide d'un broyeur de type Spex pendant 4 min à 1000 rpm, après avoir mis une bille métalliques adéquate, de diamètre de 3 à 5,5 mm, dans chaque puits de plaque et couvert la plaque à l'aide d'un film plastique thermoscellé. L'extraction d'ADN est réalisée directement dans la plaque, après broyage un tampon de lyse est ensuite ajouté à la poudre obtenue, après une période d'incubation une étape de centrifugation permet d'éliminer les débris végétaux. Le surnageant est ensuite prélevé par le robot de type Beckman Biomek et l'extraction d'ADN est réalisée suivant un kit commercial.

Les résultats de dosage sont présentés dans le tableau 2, ils sont la moyenne de 22 répétitions pour chaque variété testée. Sur l'embryon, on peut extraire ~1000 ng d'ADN, avec une concentration autour de 16 ng/µl. Par contre sur l'albumen, la concentration et le rendement sont nettement plus faibles et varient selon l'origine génétique du grain.

**Tableau 2. Concentration ADN et quantité d'ADN obtenu par extraction**

| Génotype | Poinçon 2 mm sur l'albumen | | Poinçon 2 mm sur l'embryon | |
|---|---|---|---|---|
| | Concentration en ng/µl (écart type en ng/µl ) | Quantité totale dans 60 µl | Concentration en ng/µl (écart type en ng/µl ) | Quantité totale dans 60 µl |
| Maïs variété dentée | 5.73 (± 7.35) | 344 ng | 15.93 (±4.35) | 956ng |
| Maïs variété cornée | 2.48 (± 5.50) | 149 ng | 16.82 (± 4.79) | 1009ng |

Suite à ce second essai, nous avons comparé deux diamètres de poinçon de 2 mm et 4 mm, sur l'albumen, afin d'améliorer le rendement d'extraction par augmentation de la quantité de tissu prélevé. Comme pour l'expérience précédente, les tests ont été menés pour deux génétiques différentes et les résultats sont la moyenne de 20 tests pour chaque condition. Les résultats du dosage présentés dans le tableau 3 montrent que la concentration d'ADN extrait a pu être améliorée en passant le poinçon de 2 mm à 4 mm.

**Tableau 3. Concentration ADN et quantité d'ADN obtenu par extraction**

| Génotype | Poinçon 2 mm sur l'albumen | | Poinçon 4 mm sur l'albumen | |
|---|---|---|---|---|
| | Concentration en ng/µl (écart type en ng/µl ) | Quantité totale dans 60 µl | Concentration en ng/µl (écart type en ng/µl ) | Quantité totale dans 60 µl |
| Maïs variété denté | 3.85 (± 0.61) | 231 ng | 5.83 (± 2.36) | 350ng |
| Maïs variété corné | 3.87 (± 1.06) | 232ng | 4.61 (± 1.43) | 277ng |

En fonction de la quantité d'ADN nécessitée par la technologie de génotypage employée et le type de tissu prélevé (embryon ou albumen), la taille du poinçon (volume de prélèvement) peut être adaptée. Il est aussi possible de recourir à plusieurs prélèvements sur la même graine.

### Exemple 4 : Test de germination des graines de maïs après prélèvement

Le test de germination a été réalisé dans les conditions normales du test de germination sur les semences maïs, sur les graines poinçonnées après 0, 1 et 2 mois de stockage à température ambiante. Le prélèvement traverse la graine préalablement imbibée.

Le tableau 4 présente l'évolution du taux de germination en fonction de la durée de stockage des graines poinçonnées. Le taux de germination a été calculé pour une population de cinquante graines poinçonnées.

Conclusions : (1) Les graines poinçonnées peuvent être stockées à température ambiante pendant au moins un mois, sans impact sur la germination pour les deux génétiques utilisées (semences de production 2011). (2) Après 2 mois de stockage, on observe un effet génotypique : les graines poinçonnées sur la *variété* dentée testée ont un meilleur taux de germination que les graines témoins (non poinçonnées), ceux de la variété cornée ont moins bien germé que les graines témoins.

**Tableau 4. Evolution de taux de germination des grains de maïs poinçonnés en fonction de la durée de stockage**

| | Type de poinçon (diamètre) | Durée de stockage (jour) | | | |
|---|---|---|---|---|---|
| | | 0 j | 30 j | 40 j | 60 j |
| Denté | 2 mm | 94% | 94% | - | 98% |
| | 4 mm | - | - | 96,7% | - |
| | Témoin (pas de poinçonnage) | 86% | 96% | - | 88% |
| Corné | 2 mm | 96% | 94% | - | 72% |
| | 4 mm | - | - | 83,3% | - |
| | Témoin (pas de poinçonnage) | 90% | 96% | | 96% |

### Exemple 5 : Concentration et rendement d'ADN extrait sur tournesol

Une expérimentation similaire a été conduite sur tournesol avec des poinçons de 1 ou de 2 mm de diamètre. Le prélèvement traverse la graine de part en part. L'extraction d'ADN a été faite avec le même protocole que celui utilisé pour le maïs à l'exemple 4. Cette expérimentation a été conduite sur deux génétiques différentes caractérisées par la taille de sa graine (tableau 5).

Parallèlement des tests ont été réalisés en prélevant plusieurs fragments sur une même graine. Jusqu'à 3 prélèvements peuvent être faits sur un même grain de tournesol tout en s'assurant que l'extraction d'ADN sera correcte même pour une génétique ou les grains sont de petite taille.

Enfin des tests de pool de fragments ont été faits, jusqu'à 5 grain par puits avec 1, 2 ou 3 fragments par graine. Les extractions d'ADN ont permis d'obtenir des rendements corrects pour toutes ces combinaisons, ce qui nous indique que l'on peut envisager des pools de 15 fragments issus de graines différentes dans un même puits.

**Tableau 5. Concentration d'ADN en ng/µl obtenu par extraction**

| Génotype | Nombre de grains par puits | Concentration (ng/µl) | | | | | |
|---|---|---|---|---|---|---|---|
| | | Poinçon 1 mm sur l'albumen | | | Poinçon 2 mm sur l'albumen | | |
| | | 1 fragment par grain | 2 fragments par grain | 3 fragments par grain | 1 fragment par grain | 2 fragments par grain | 3 fragments par grain |
| Petit grain | 1 grain par puits | 1,5 | 5,8 | 7,1 | 12,9 | 18,4 | 27,7 |
| | 5 grains par puits | 19,2 | 26,3 | 25,4 | 43,5 | 40,1 | 55,1 |
| Gros grain | 1 grain par puits | 0,1 | 6,8 | 11,8 | 14,7 | 17,6 | 24,7 |
| | 5 grains par puits | 12,3 | 20,5 | 27,0 | 41,6 | 31,3 | 48,0 |

### Exemple 6 : Extraction D'ADN et analyse sur des bulks de fragments de grains de tournesol.

Des bulks de 5 et 10 graines ont été faits selon 3 modalités suivantes.

**Tableau 6. Description des bulks**

| Identifiant | Modalité | Description |
|---|---|---|
| LINE01_B005 | 5 | 5 grains de la lignée 01 |
| LINE01-02_B005 | 4 +1 | 4 grains de la lignée 01 + 1 grain de la lignée 02 |
| LINE01-HY01_B005 | 4 + 1 | 4 grains de la lignée 01 + 1 grain de l'hybride 01 |
| LINE01_B010 | 10 | 10 grains de la lignée 01 |
| LINE01-02_B010 | 9 +1 | 9 grains de la lignée 01 + 1 grain de la lignée 02 |
| LINE01-HY01_B010 | 9 + 1 | 9 grains de la lignée 01 + 1 grain de l'hybride 01 |

Les grains présentent les caractéristiques suivantes décrites dans le tableau 7.

**Tableau 7. Caractéristique des grains**

| Code | Description |
|---|---|
| Lignée 01 | Petits grains fins (Longueur L : 8 mm, largeur I : 3 mm) |
| Lignée 02 | Grains moyens (L : 10 mm, I : 5 mm) |
| Hybride 01 | Gros grains (L : 13 mm, I : 7 mm) |

Les fragments de grains ont été prélevés avec un poinçon de 2mm de diamètre sur l'épaisseur de la graine. Une bille de 5,5 mm a été ajoutée dans chaque puits. La plaque a été thermoscellée et un film PCR autocollant a été ajouté. Le broyage a été réalisé au broyeur Spex à 1100 rpm pendant 4 min. L'ADN a été extrait selon la méthode décrite dans Rogers & Bendich (1994, Extraction of DNA from plant, fungal and algal tissues., In. Gelvin SB, Schilperoot RA (eds) Plant Molecular Biology Manual), la lyse est effectuée pendant 1 minute à 65°C. La concentration moyenne totale obtenue est de 55 ng/µL décrite dans le tableau 8. Il n'y a pas de différences significative entre les concentrations en bulk de 5 grains et celle en bulk de 10 grains.

**Tableau 8. Concentration moyenne d'ADN par identifiant et concentration moyenne totale d'ADN des identifiants**

| Identifiant | Concentration moyenne d'ADN en ng/µL (écart type en ng/µL) |
|---|---|
| LlNE01_B005 | 60,9 (7,37) |
| LINE01-02_B005 | 50,4 (6,30) |
| LINE01-HY01_B005 | 51,8 (4,19) |
| LINE01_B010 | 60,2 (5,98) |
| LINE01-02_B010 | 54,4 (3,67) |
| LINE01-HY01_B010 | 55,4 (7,23) |
| Concentration moyenne totale en ng/µL (écart type en ng/µL) | 55,5 (6,62) |

La méthode de génotypage utilisée pour identifier des marqueurs de type SNP peut être la méthode de type Kaspar de KBioscience (LGC Group, Teddington, Middlesex, UK). Cette méthode utilise un mix de trois amorces pour amplifier par PCR la région ou se trouve le SNP, deux de ces amorces sont spécifiques de chacune des formes du SNP, la troisième amorce, non discriminante est située en position réserve par rapport aux deux premières amorces. Chacune des amorces spécifique comprend une séquence ADN 5' terminale caractéristique. L'amplification PCR va permettre d'amplifier la région située entre les deux extrémités 5' des amorces, ainsi que la partie 5' terminale caractéristique de l'amorce ayant permis l'amplification. La présence de cette région 5' terminale va être révélée par l'utilisation de marqueurs fluorescents spécifiques de l'une ou l'autre des régions présentes.

Les ADN ont été dilués au 1/50^{ème} (1/10^{ème} puis 1/5^{ème}) avant d'être génotypés avec 15 marqueurs SNP du kit discriminant et le marqueur du trait X. Les marqueurs discriminants sont utilisés pour l'analyse de pureté variétale et le marqueur X est utilisé pour l'analyse de pureté de trait X.

**Tableau 9. Analyse de la pureté de trait X (H signifie que le marqueur est hétérozygote)**

| | C/T | G/T | A/G | C/T | C/T | A/G | C/T | A/G | A/G | C/G | A/G | A/C | C/T | A/G | C/G |
|---|---|---|---|---|---|---|---|---|---|---|---|---|---|---|---|
| CODE/Marqueur | 1 | 2 | 3 | 4 | 5 | 6 | 7 | 8 | 9 | 10 | 11 | 12 | 13 | 14 | 15 |
| LIGNEE_01 | C | T | A | T | T | G | T | G | G | G | A | A | T | G | G |
| LIGNEE_02 | T | T | A | T | T | A | C | A | G | G | A | C | C | A | G |
| HYBRIDE_01 | H | T | H | T | H | H | H | G | G | H | H | H | H | H | H |
| Entre LINE01 et LINE02 | Oui | Non | Non | Non | Non | Oui | Oui | Oui | Non | Non | Non | Oui | Oui | Oui | Non |
| Entre LINE01 et HYBRIDE_01 | Oui | Non | Oui | Non | Oui | Oui | Oui | Non | Non | Oui | Oui | Oui | Oui | Oui | Oui |

Parmi cet ensemble de marqueurs, 12 sont polymorphes et les résultats d'amplification montrent que: le mélange d'un grain d'une lignée ou d'un hybride avec 4 ou 9 grains d'une autre lignée provoque l'apparition d'un cluster « hétérozygote » dans les tests. Ce cluster est plus ou moins rapproché d'un des clusters homozygotes selon la fréquence de la forme minoritaire du marqueur polymorphe. Ce décalage indique qu'un grain différent dans un mélange de grains peut être détecté.

**Tableau 10. Pourcentages de détection selon les bulks et les marqueurs.**

| Marqueurs | Bulk (nombre de grains) | Marqueur Polymorphes | | % de détection d'un grain différent dans un mélange de 5 ou 10 grains | |
|---|---|---|---|---|---|
| | | Entre LINE01 et LINE02 | Entre LINE01 et HYBRIDE_01 | Entre LINE01 et LINE02 | Entre LINE01 et HYBRIDE_01 |
| 1 | 5 | Oui | Oui | 100 | 100 |
| 3 | 5 | Non | Oui | | 100 |
| 14 | 5 | Oui | Oui | 100 | 100 |
| 5 | 5 | Non | Oui | | 0 |
| 6 | 5 | Oui | Oui | 100 | 100 |
| 15 | 5 | Non | Oui | | 100 |
| 7 | 5 | Oui | Oui | 100 | 50 |
| 8 | 5 | Oui | Non | 75 | |
| 10 | 5 | Non | Oui | | 100 |
| 11 | 5 | Non | Oui | | 75 |
| 12 | 5 | Oui | Oui | 100 | 100 |
| 13 | 5 | Oui | Oui | 100 | 100 |
| 1 | 10 | Oui | Oui | 50 | 40 |
| 3 | 10 | Non | Oui | | 25 |
| 14 | 10 | Oui | Oui | 100 | 100 |
| 5 | 10 | Non | Oui | | 0 |
| 6 | 10 | Oui | Oui | 100 | 100 |
| 15 | 10 | Non | Oui | | 100 |
| 7 | 10 | Oui | Oui | 100 | 100 |
| 8 | 10 | Oui | Non | 50 | |
| 10 | 10 | Non | Oui | | 100 |
| 11 | 10 | Non | Oui | | 0 |
| 12 | 10 | Oui | Oui | 100 | 100 |
| 13 | 10 | Oui | Oui | 100 | 100 |

Un score de 100% correspond à la détection systématique répétée quatre fois du grain de la lignée01 ou de l'HY01 dans le mélange de 5 ou 10 grains.

Bulk de 5 grains :
Le grain de la lignée 02 est détecté à 100% pour 6 marqueurs sur 7 (7 marqueurs polymorphes possibles). Pour un marqueur, le mélange est détecté à 75%.
Le grain de l'HY 01 est détecté à 100% pour 8 marqueurs sur 11. Pour un marqueur, le mélange n'est pas du tout détecté. Pour 2 marqueurs, le mélange est détecté au moins à 50%.

Bulk de 10 grains :
Le grain de la lignée 02 est détecté à 100% pour 5 marqueurs sur 7 et à au moins 50% pour 2 marqueurs sur 7.
Le grain de l'hybride 01 est détecté à 100% pour 7 marqueurs sur 11. Pour 2 marqueurs, le mélange n'est pas du tout détecté. Pour 2 marqueurs, le mélange est détecté au moins à 25%.

**Tableau 11 : Intensité relative de fluorescence pour les marqueurs 1 et 2 les bulks de 5 et 10 graines**

| Symbole | Identifiant | Modalité | Description |
|---|---|---|---|
| 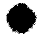 | LlNE01_B005 | 5 | 5 grains de la lignée 01 |
| 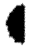 | LINE01-02_B005 | 4 +1 | 4 grains de la lignée 01 + 1 grain de la lignée 02 |
| 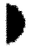 | LINE01-HY01_B005 | 4 + 1 | 4 grains de la lignée 01 + 1 grain de l'hybride 01 |
| 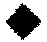 | LINE01_B010 | 10 | 10 grains de la lignée 01 |
| 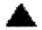 | LINE01-02_B010 | 9 +1 | 9 grains de la lignée 01 + 1 grain de la lignée 02 |
| 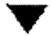 | LINE01-HY01_B010 | 9 + 1 | 9 grains de la lignée 01 + 1 grain de l'hybride 01 |

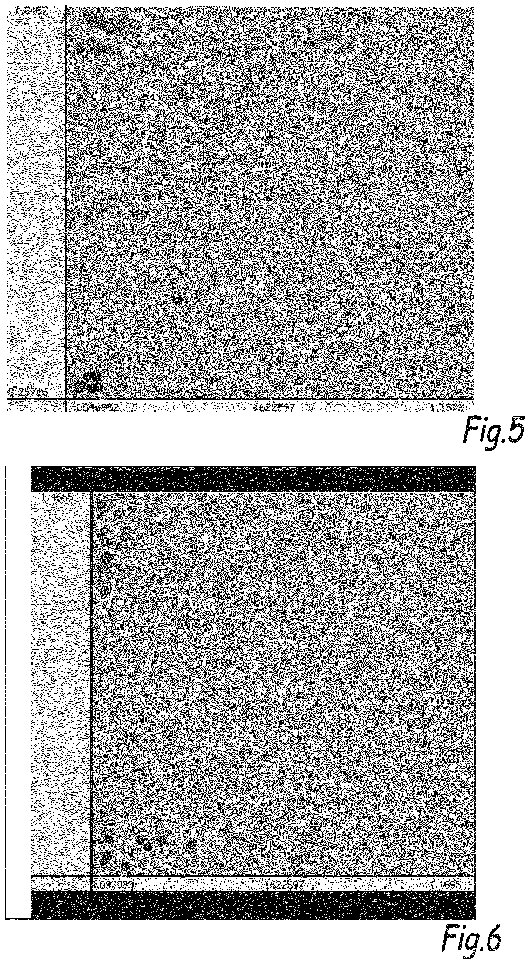

Les résultats de l'intensité relative de fluorescence pour les marqueurs sont également représentés dans les figures 5 et 6.

Les points ronds représentés en bas à gauche des figures 5 et 6 correspondent à des contrôles sans ADN. Le carré blanc en bas à droite de la figure 5 correspond également à un contrôle homozygote.

L'extraction d'ADN à partir d'un mélange (bulk) de 5 ou 10 fragments de 2 mm de tournesol est possible. Cette extraction donne en moyenne une concentration de 55ng/µl.

La détection d'un grain de génotype différent parmi 5 ou 10 grains d'un même génotype est possible après un génotypage en point final Kaspar. La présence du grain de génotype différent se caractérise par un décalage du cluster de points dans la figure 5 ou 6. Cependant, le cluster « hétérozygote » ainsi obtenu est très proche du cluster homozygote et la détection est plus nette en bulk de 5 grains qu'en bulks de 10 grains.

### Exemple 7 : Différents types de traitement testés sur un échantillonnage non destructif effectué chez le maïs, le prélèvement traversant la graine de part en part.

Les différents types de traitement testés chez le maïs sont les suivants :
ModA6 : échantillonnage effectué sur grain sec après imbibition durant 6h dans de l'eau
ModA12 : échantillonnage effectué sur grain sec après imbibition durant 12h dans de l'eau
ModB : échantillonnage sur les grains à la récolte (26 à 32 % d'humidité des grains)
ModC : échantillonnage sur les grains à mi séchage (17 à 21 % d'humidité des grains) Témoins : grains secs non échantillonnés
L'humidité des grains est mesurée à l'aide d'un humidimètre, par exemple un humidimètre Chopin®, modèle While 65 ou par NIRS (proche infrarouge).

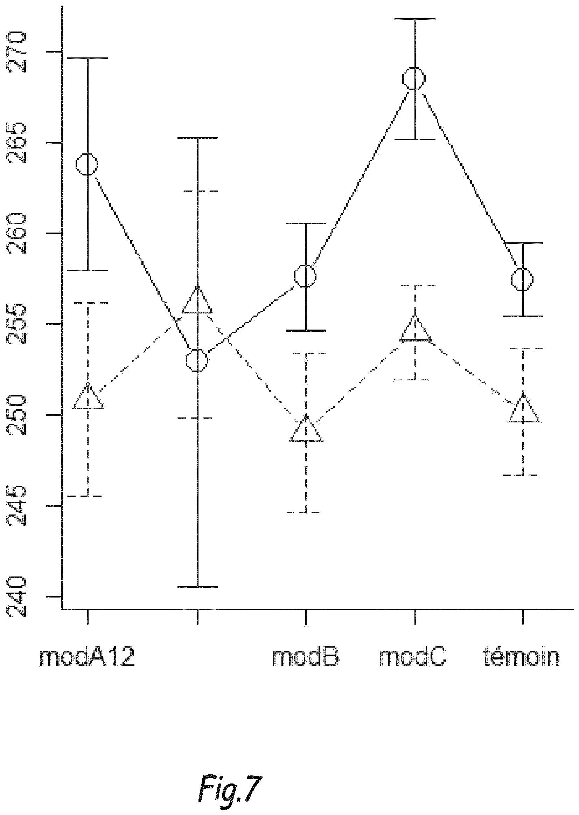

Afin de vérifier le caractère non destructif, les grains ont ensuite été semés et le comportement des plantes obtenues a été noté :
Hauteurs des plantes : cette hauteur a été mesurée à maturité sur deux expérimentations portant sur des génotypes corné ou corné denté. L'expérimentation a porté sur 100 plantes et trois répétitions de cette expérimentation ont été effectuées. Les résultats des hauteurs des plantes en moyenne et leurs écarts-types sont représentés dans la figure 7. Le génotype corné-denté est représenté dans la figure 7 par des points ronds et le génotype corné est représenté dans la figure 7 par des points triangulaires.

L'analyse statistique n'indique pas qu'il y ait un effet de l'échantillonnage sur la hauteur de plante.

Durée des floraisons : l'expérimentation a porté sur 100 plantes et 3 répétitions de cette expérimentation ont été effectuées. L'analyse statistique n'indique pas qu'il y ait un effet de l'échantillonnage sur la durée de floraison .

Présence de petites plantes: l'expérimentation a porté sur 100 plantes du même génotype et 3 répétitions de cette expérimentation ont été effectuées. L'analyse statistique n'indique pas qu'il y ait un effet de l'échantillonnage sur le nombre de petites plantes dans la variété étudiée.

Exemple 8 : Etude de la conservation en chambre froide après échantillonnage dans l'albumen :
Suite à une imbibition de 6 heures en eau claire, les grains d'une variété cornée et d'une variété dentée ont été échantillonnés selon le protocole de poinçonnage décrit précédemment (diamètre de 3 mm). Après l'échantillonnage, les grains ont été séchés, puis conservés en chambre froide durant 7, 10, 15, 21 ou 30 jours, puis semés en terrine de sable. 100 graines ont été utilisées par modalité et 3 répétitions ont été faites pour chaque modalité. Pour chaque condition et génotype, un semis de graines témoin a été effectué (les graines témoins n'ont pas été poinçonnées mais ont été stockées en chambre froide). Le nombre de plantes ayant germé a été mesuré et les résultats sont présentés figure 8. Après différentes périodes de conservation en chambre froide, le taux de germination n'est que légèrement impacté, les cornés étant légèrement moins sensibles que les dentés à ce protocole.

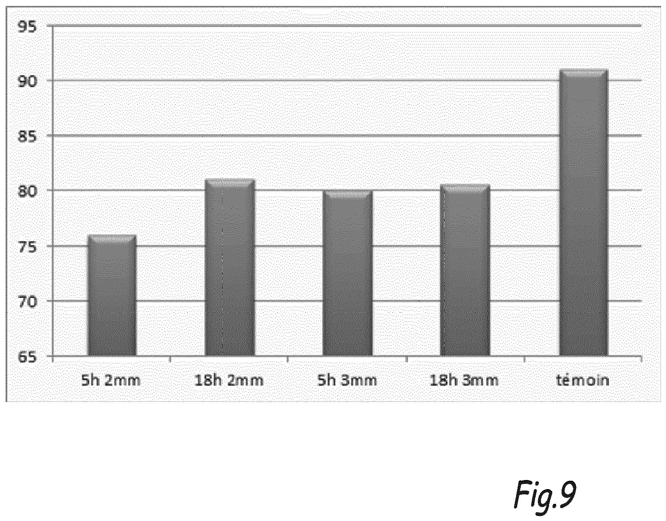

Exemple 9 : Le comportement des graines après poinçonnage dans l'albumen a été étudié à partir de 11 lignées de maïs. Les temps d'imbibition étant de 5 ou de 18h et pour chaque condition les poinçons étaient de 2 ou de 3 mm, pour chaque lignée un témoin a été conservé non imbibé et non poinçonné. Les résultats des moyennes pour ces lignées sont présentés en figure 9.

Figure 9 : Pourcentage de germination des graines à 3 semaines après semis, pour la moyenne des 11 lignées étudiées dans les différentes conditions : 5h 2mm : imbibition de 5h, poinçon de 2mm, 18h 2mm : imbibition de 18h et poinçon de 2mm, 5h 3mm : imbibition de 5h et poinçon de 3mm, 18h 3mm : imbibition de 18h et poinçon de 3mm , témoin : moyenne des témoins des 11 lignées non imbibé et non poinçonné.

Le pourcentage de germination est légèrement affecté par le prélèvement suivant le protocole, sans pour autant que l'on observe de différence entre les différents temps d'imbibition ou le diamètre du poinçon.

## Revendications

1. Procédé d'échantillonnage et d'analyse de tissu de graines, pour le génotypage des graines tout en conservant la capacité germinative, comprenant les étapes suivantes :
- disposer d'une ou plusieurs graines à génotyper,
- optionnellement imbiber d'eau la graine de manière à la ramollir et permettre l'étape suivante,
- effectuer le prélèvement manuel ou semi-automatique d'un volume d'échantillon déterminé dans l'albumen ou le cotylédon de la ou des graines, à l'aide d'un emporte-pièce conçu pour découper, emporter, puis libérer un volume déterminé de tissu, ce volume étant déterminé pour permettre l'analyse d'au moins un constituant de la graine ou des graines,
- placer le prélèvement de tissu d'une graine unique ou de plusieurs graines dans un puits identifié et traçable,
- effectuer l'analyse de génotypage sur le contenu du ou des puits.
- déterminer le ou les échantillons ayant le ou les caractères génomiques recherchés, optionnellement semer la ou les graines sélectionnées qui correspondent à ces échantillons ayant le ou les caractères génomiques recherchés.

2. Procédé selon la revendication 1, dans lequel le prélèvement manuel ou semi-automatique est réalisé de manière à conserver le caractère germinatif de la graine, et, après prélèvement, la graine est placée dans un puits identifié et traçable, ou sur un support ou ruban adhésif, indexé au puits de réception de l'échantillon, de préférence d'albumen, correspondant, préalablement prélevé et placé dans le puits.

3. Procédé d'échantillonnage et d'analyse de tissu de graine, pour la caractérisation de graines dans le cadre d'un contrôle qualité d'un lot de semences, de préférence analyse d'identité, analyse de pureté génétique ou analyse de diversité génétique, comprenant :
a. disposer de plusieurs graines à analyser issues d'un lot de semences, préférentiellement de façon aléatoire
b. optionnellement humidifier les graines de manière à les ramollir et permettre l'étape suivante,
c. effectuer le prélèvement manuel ou semi-automatique d'un volume d'échantillon déterminé dans l'albumen, le cotylédon et/ou l'embryon des graines, à l'aide d'un emporte-pièce conçu pour découper, emporter, puis libérer un volume déterminé de tissu, ce volume étant déterminé pour permettre l'analyse de génotypage, placer chaque prélèvement de graines dans un puits ou placer les prélèvements de tissu des graines dans un même puits, les puits étant identifiés et traçables,
d. effectuer l'analyse sur chaque échantillon ou sur le pool d'échantillons,
e. déterminer dans chaque échantillon ou pool d'échantillons la présence ou l'absence du ou des caractères recherchés,
f. valider ou non la conformité du lot de semences en fonction des résultats de l'étape précédente.

4. Procédé de la revendication 3, ou la contrôle qualité est fait sur la base du génotypage de chaque échantillon ou pool d'échantillon.

5. Procédé selon l'une quelconque des revendications 1 à 4, dans lequel l'emporte-pièce comporte une tige creuse ou embout et le prélèvement de tissu s'effectue avec cette tige ou embout traversant la graine de part en part.

6. Procédé selon l'une quelconque des revendications 1 à 5, dans lequel l'emporte-pièce est un poinçon, de préférence un poinçon ayant un embout ou tige emporte-pièce ayant un diamètre compris entre environ 1 et environ 5 mm, de préférence entre environ 2 et environ 4 mm.

7. Procédé selon l'une quelconque des revendications 3 et 4, dans lequel, à l'aide de l'emporte-pièce, on prélève de l'albumen, du cotylédon, de l'embryon ou de l'albumen et de l'embryon ou du cotylédon et de l'embryon.

8. Procédé selon l'une quelconque des revendications précédentes, dans lequel l'emporte-pièce comporte un corps agencé de manière à pouvoir être tenu à la main ou fixé à un support, un embout emporte-pièce relié à ce corps et agencé de manière à pouvoir être enfoncé dans la graine, de préférence en la traversant, en y découpant un volume de tissu prédéterminé, et des moyens permettant de libérer ce volume de tissu.

9. Procédé selon l'une quelconque des revendications précédentes, dans lequel, à l'aide du poinçon, l'échantillon de tissu est libéré et placé dans un puits d'une plaque multipuits.

10. Procédé selon l'une quelconque des revendications précédentes, dans lequel plusieurs échantillons, notamment de 5 à 30, de préférence de 10 à 20 échantillons de tissu sont successivement placés dans un puits, notamment d'une plaque multipuits, et représentent un volume de tissu prédéterminé.

11. Procédé selon la revendication 9 ou 10, dans lequel est utilisée au moins une machine comportant la combinaison d'une plaque multipuits amovible et d'un receveur d'échantillon, l'un des deux au moins étant mobile, la plaque et le receveur sont asservis entre eux pour permettre le déplacement de la plaque et/ou du receveur dans des conditions faisant coïncider un puits de la plaque et le receveur.

12. Procédé selon la revendication 11, dans lequel la machine comporte en outre des moyens électroniques permettant cet asservissement et l'enregistrement de la position de chaque échantillon ou groupe d'échantillons dans un puits de la plaque après que le receveur a délivré le ou les échantillons dans le puits sous-jacent.

13. Procédé selon la revendication 11 ou 12, dans lequel le receveur, éventuellement amovible ou interchangeable, comprend un orifice ayant, au moins en sa partie supérieure destinée à recevoir l'échantillon, une forme conique ou évasée, dont le grand diamètre ou ouverture est situé côté supérieur, et l'ouverture inférieure de l'orifice est dimensionnée pour avoir un diamètre inférieur ou égal, de préférence inférieur, au diamètre d'un puits de la plaque multipuits.

14. Procédé selon l'une des revendications 11 et 13, dans lequel ladite machine comporte en outre une unité agencée de manière à pouvoir recevoir un réceptacle pour les graines dont on a préalablement prélevé un échantillon de tissu, ce réceptacle étant de préférence une plaque multipuits ou un support ou bande adhésive ou comportant des zones adhésives.

15. Procédé selon la revendication 11, dans lequel ladite machine comporte en outre une unité agencée de manière à pouvoir recevoir un réceptacle pour les graines dont on a préalablement prélevé un échantillon de tissu, ce réceptacle étant de préférence une plaque multipuits ou un support ou bande adhésive ou comportant des zones adhésives, et les moyens électroniques sont conçus pour permettre de relier informatiquement l'échantillon déposé dans son puits de plaque de réception d'échantillon à sa graine déposée sur ce réceptacle.

16. Procédé selon l'une des revendications 11 à 13, dans lequel des moyens permettant de faire passer un ou plusieurs échantillons du receveur au puits sont prévus, ces moyens étant actionnés soit manuellement après positionnement du receveur et du puits, soit par des moyens électroniques une fois le bon positionnement réalisé.

17. Procédé selon la revendication 1 ou 2, dans lequel, après prélèvement de l'échantillon, les graines sont disposées sur un ruban adhésif, de préférence ruban biodégradable, et apte à permettre la germination, en des emplacements indexés par rapport aux échantillons prélevés sur elles, et, avant mise en culture, les graines correspondant aux échantillons n'ayant pas passé le test sont optionnellement éliminées.

18. Procédé selon l'une quelconque des revendications 1 à 17, dans lequel les graines sont placées dans l'eau pendant une durée suffisante pour les imbiber, de préférence durant d'environ 4 à 6 h, puis le prélèvement est effectué à l'aide de l'emporte-pièce.

19. Procédé selon la revendication 19, dans lequel, après le prélèvement, les graines sont séchées, de préférence à température ambiante ou dans un four, et stockées en attendant d'être semées.

20. Procédé selon la revendication 20, dans lequel les graines sont enrobées après séchage.

## Patentansprüche

1. Probenentnahme- und Analyseverfahren für Samengewebe für die Genotypisierung von Samen unter Beibehaltung der Keimfähigkeit, umfassend die folgenden Schritte:
- Bereitstellen eines oder mehrerer Samen, die genotypisiert werden sollen,
- optional Einweichen des Samens in Wasser, um ihn aufzuweichen und den nächsten Schritt zu ermöglichen,
- manuelles oder halbautomatisches Entnehmen eines bestimmten Probenvolumens aus dem Eiweiß oder dem Keimblatt des oder der Samen mittels einer Stanze, die dazu bestimmt ist, ein bestimmtes Volumen an Gewebe zu schneiden, abzutransportieren und dann freizugeben, wobei dieses Volumen bestimmt ist, um die Analyse mindestens eines Bestandteils des oder der Samen zu ermöglichen,
- Platzieren der Gewebeprobe eines einzelnen Samens oder mehrerer Samen in ein identifiziertes und rückverfolgbares Well,
- Durchführen der Genotypisierungsanalyse über den Inhalt des oder der Wells.
- Bestimmen der Probe(n), die das oder die gesuchten genomischen Merkmal(e) aufweisen, optional aussäen des oder der ausgewählte(n) Samen, die diesen Proben entsprechen, die das oder die gesuchten genomischen Merkmal(e) aufweisen.

2. Verfahren nach Anspruch 1, **dadurch gekennzeichnet, dass** die manuelle oder halbautomatische Probenahme durchgeführt wird, sodass die Keimfähigkeit des Samens erhalten bleibt, und dass der Samen nach der Probenahme in ein identifiziertes und rückverfolgbares Well oder auf einen Träger oder ein Klebeband, der bzw. das mit dem Probenaufnahme-Well indexiert ist, um die entsprechende Probe, vorzugsweise von Eiweiß, die zuvor entnommen und in das Well platziert wurde, platziert wird.

3. Probenentnahme- und Analyseverfahren für Samengewebe zur Charakterisierung von Samen im Rahmen der Qualitätskontrolle einer Saatgut-Charge, vorzugsweise zur Identitätsanalyse, zur Analyse der genetischen Reinheit oder zur Analyse der genetischen Vielfalt, umfassend:
a. Bereitstellen mehrerer zu analysierender Samen aus einer Saatgut-Charge, vorzugsweise nach dem Zufallsprinzip
b. optional Anfeuchten der Samen, um sie aufzuweichen und den nächsten Schritt zu ermöglichen,
c. Durchführen der manuellen oder halbautomatischen Entnahme eines bestimmten Probenvolumens aus dem Eiweiß, dem Keimblatt und/oder dem Embryo der Samen mittels Hilfe einer Stanze, die dazu bestimmt ist, ein bestimmtes Volumen an Gewebe zu schneiden, abzutransportieren und dann freizugeben, wobei dieses Volumen bestimmt ist, um eine Genotypisierungsanalyse zu ermöglichen, Platzieren jeder Samenprobe in ein Well oder Einbringen der Samengewebeproben in dasselbe Well, wobei die Wells identifiziert und rückverfolgbar sind,
d. Durchführen der Analyse über jede Probe oder das Probenpool,
e. Bestimmen in jeder Probe oder in dem Probenpool des Vorhandenseins oder Nichtvorhandenseins des oder der gesuchten Merkmale,
f. Validieren oder nicht der Konformität der Saatgut-Charge abhängig von den Resultaten des vorherigen Schritts.

4. Verfahren nach Anspruch 3, wobei die Qualitätskontrolle auf Grundlage der Genotypisierung jeder Probe oder jedes Probenpools durchgeführt wird.

5. Verfahren nach einem der Ansprüche 1 bis 4, wobei die Stanze einen hohlen Schaft oder eine hohle Spitze aufweist und die Gewebeentnahme mit diesem Schaft oder dieser Spitze teilweise durch den Samen durchgeführt wird.

6. Verfahren nach einem der Ansprüche 1 bis 5, wobei der Ausstecher ein Stempel ist, vorzugsweise ein Stempel, der eine Spitze oder einen Schaft zum Ausstechen aufweist, die/der einen Durchmesser zwischen etwa 1 und etwa 5 mm, vorzugsweise zwischen etwa 2 und etwa 4 mm, aufweist.

7. Verfahren nach einem der Ansprüche 3 und 4, wobei mit dem Ausstecher Eiweiß, Keimblatt, Embryo oder Eiweiß und Embryo oder Keimblatt und Embryo entnommen werden.

8. Verfahren nach einem der vorherigen Ansprüche, wobei die Stanze einen Körper, der angeordnet ist, um in der Hand gehalten oder an einer Halterung befestigt zu werden, eine Stanzspitze, die mit diesem Körper verbunden und angeordnet ist, um in den Samen, vorzugsweise durch diesen hindurch, getrieben zu werden, wobei ein vorbestimmtes Gewebevolumen herausgeschnitten wird, und Einrichtungen, die ein Freisetzen dieses Gewebevolumens ermöglichen, umfasst.

9. Verfahren nach einem der vorherigen Ansprüche, wobei die Gewebeprobe mittels des Stempels freigegeben und in ein Well einer Multi-Well-Platte platziert wird.

10. Verfahren nach einem der vorherigen Ansprüche, wobei eine Vielzahl von Proben, insbesondere 5 bis 30, vorzugsweise 10 bis 20 Gewebeproben, nacheinander in ein Well, insbesondere eine Multi-Well-Platte, platziert werden und ein vorbestimmtes Gewebevolumen darstellen.

11. Verfahren nach Anspruch 9 oder 10, wobei mindestens eine Maschine verwendet wird, die eine Kombination aus einer abnehmbaren Multi-Well-Platte und einem Probenempfänger umfasst, wovon mindestens einer beweglich ist, wobei die Platte und der Empfänger aufeinander abgestimmt sind, um eine Bewegung der Platte und/oder des Empfängers unter Bedingungen zu ermöglichen, die dazu führen, dass ein Well der Platte und der Empfänger übereinstimmen.

12. Verfahren nach Anspruch 11, wobei die Maschine ferner elektronische Einrichtungen umfasst, für eine solche Regulierung und Aufzeichnung der Position jeder Probe oder Probengruppe in einem Well der Platte umfasst, nachdem der Empfänger die Probe(n) in das darunterliegende Well platziert hat.

13. Verfahren nach Anspruch 11 oder 12, wobei der möglicherweise abnehmbare oder ersetzbare Behälter eine Öffnung umfasst, die zumindest in ihrem oberen Teil, der zum Aufnehmen der Probe bestimmt ist, eine konische oder aufgeweitete Form aufweist, deren großer Durchmesser oder Öffnung sich auf der Oberseite befindet, und die untere Öffnung der Öffnung dimensioniert ist, sodass sie einen Durchmesser aufweist, der kleiner als oder gleich wie, vorzugsweise kleiner als der Durchmesser eines Wells der Multi-Well-Platte ist.

14. Verfahren nach einem der Ansprüche 11 und 13, wobei die Maschine ferner eine Einheit umfasst, die angeordnet ist, um ein Gefäß für die Samen aufnehmen zu können, von denen zuvor eine Gewebeprobe entnommen wurde, wobei dieses Gefäß vorzugsweise eine Multi-Well-Platte oder ein Klebeträger oder Klebeband ist oder Klebeflächen umfasst.

15. Verfahren nach Anspruch 11, wobei die Maschine ferner eine Einheit umfasst, die angeordnet ist, um ein Gefäß für die Samen aufnehmen zu können, von denen zuvor eine Gewebeprobe entnommen wurde, wobei dieses Gefäß vorzugsweise eine Multi-Well-Platte oder ein Klebeträger oder Klebeband ist oder Klebeflächen umfasst, und die elektronischen Einrichtungen konstruiert sind, um zu ermöglichen, die in dem Probenaufnahme-Well deponierte Probe computergesteuert mit ihrem auf dem Gefäß deponierten Samen zu verknüpfen.

16. Verfahren nach einem der Ansprüche 11 bis 13, wobei Einrichtungen vorgesehen sind, um eine oder mehrere Proben von dem Empfänger zu den Wells zu leiten, wobei diese Einrichtungen entweder manuell betätigt werden, nachdem der Empfänger und das Well positioniert worden sind, oder durch elektronische Einrichtungen, sobald eine korrekte Positionierung erreicht worden ist.

17. Verfahren nach Anspruch 1 oder 2, wobei die Samen nach der Probenentnahme auf einem Klebeband, vorzugsweise einem biologisch abbaubaren Klebeband, das angepasst ist, um die Keimung zu ermöglichen, an Stellen angeordnet werden, die den daraus entnommenen Proben zugeordnet sind, und wobei vor einem Kultivieren die Samen, die den Proben entsprechen, die den Test nicht bestanden haben, optional eliminiert werden.

18. Verfahren nach einem der Ansprüche 1 bis 17, wobei die Samen über eine ausreichende Zeit, um sie zu durchtränken, vorzugsweise über etwa 4 bis 6 Stunden, in Wasser gelegt werden und dann die Probenentnahme mit der Stanze durchgeführt wird.

19. Verfahren nach Anspruch 19, wobei die Samen nach der Entnahme getrocknet werden, vorzugsweise bei Raumtemperatur oder in einem Ofen, und bis zur Aussaat gelagert werden.

20. Verfahren nach Anspruch 20, wobei die Samen nach dem Trocknen beschichtet werden.

## Claims

1. A method of sampling and analyzing seed tissue for genotyping of seeds while maintaining germination capacity, comprising the following steps:
- having one or more seeds to genotype,
- optionally soaking the seed with water to soften it and enable the next step,
- manually or semi-automatically collecting a determined volume of sample from the albumen or cotyledon of the seed(s), using an outline cutter designed to cut, carry away and then release a determined volume of tissue, this volume being determined to allow the analysis of at least one constituent of the seed(s),
- placing the tissue sample from a single seed or multiple seeds into an identified, traceable well,
- performing the genotyping analysis on the contents of the well(s).
- determining the sample(s) with the desired genomic trait(s), optionally sow the selected seed(s) corresponding to those samples that have the desired genomic trait(s).

2. A method according to claim 1, wherein the manual or semi-automatic collecting is carried out in such a way as to preserve the germinative character of the seed, and, after being collected, the seed is placed in an identified, traceable well, or on a support or adhesive tape, indexed to the well for receiving the corresponding sample, preferably of albumen, previously collected and placed in the well.

3. A method of sampling and analysing seed tissue, for the characterisation of seeds in the context of quality control of a seed lot, preferably identity analysis, genetic purity analysis or genetic diversity analysis, comprising:
a. having several seeds to be analysed from a seed lot, preferably at random
b. optionally moistening the seeds with water to soften them and enable the next step,
c. manually or semi-automatically collecting a determined volume of sample from the albumen, cotyledon and/or embryo of the seeds, using an outline cutter designed to cut, carry away and then release a determined volume of tissue, this volume being determined to allow genotyping analysis, placing each seed sample into a well or placing the seed tissue samples in the same well, the wells being identified and traceable,
d. performing the analysis on each sample or on the sample pool,
e. determining in each sample or pool of samples the presence or absence of the characteristic(s) of interest,
f. validate or not validate the compliance of the seed lot according to the results of the previous step.

4. The method of claim 3, wherein the quality control is done on the basis of genotyping of each sample or sample pool.

5. A method according to any one of claims 1 to 4, wherein the outline cutter comprises a hollow shaft or tip and the tissue is collected with this shaft or tip passing all the way through the seed.

6. A method according to any one of claims 1 to 5, wherein the outline cutter is a punch, preferably a punch having an outline cutter tip or shaft having a diameter between about 1 and about 5 mm, preferably between about 2 and about 4 mm.

7. A method according to any one of claims 3 and 4, wherein, using the outline cutter, the albumen, cotyledon, embryo or albumen and embryo or cotyledon and embryo are collected.

8. A method according to any one of the preceding claims, wherein the outline cutter comprises a body arranged to be hand-held or attached to a support, an outline cutter tip connected to this body and arranged to be pressed into the seed, preferably through it, cutting out a predetermined volume of tissue, and means for releasing that volume of tissue.

9. A method according to any one of the preceding claims, wherein, using the punch, the tissue sample is released and placed into a well of a multi-well plate.

10. A method according to any one of the preceding claims, wherein a plurality of samples, in particular from 5 to 30, preferably from 10 to 20 tissue samples are successively placed into a well, in particular of a multi-well plate, and represent a predetermined tissue volume.

11. A method according to claim 9 or 10, wherein at least one machine is used comprising the combination of a removable multi-well plate and a sample receiver, at least one of which is movable, the plate and the receiver are linked to each other to allow movement of the plate and/or the receiver under conditions which cause a well of the plate and the receiver to coincide.

12. A method according to claim 11, wherein the machine further comprises electronic means to enable such linking and the recording of the position of each sample or group of samples in a well of the plate after the recipient has delivered the sample(s) into the underlying well.

13. A method according to claim 11 or 12, wherein the optionally removable or interchangeable receiver comprises an orifice having, at least in its upper part intended to receive the sample, a conical or flared shape, the large diameter or opening of which is located on the upper side, and the lower opening of the orifice is dimensioned to have a diameter smaller than or equal to, preferably smaller than, the diameter of a well of the multi-well plate.

14. A method according to any of claims 11 and 13, wherein said machine further comprises a unit arranged to receive a receptacle for seeds from which a tissue sample has been previously collected, said receptacle preferably being a multi-well plate, or an adhesive carrier or tape or having adhesive areas.

15. A method according to claim 11, wherein said machine further comprises a unit arranged to receive a receptacle for seeds from which a tissue sample has been previously collected, said receptacle preferably being a multi-well plate or an adhesive carrier or tape or having adhesive areas, and the electronic means are designed to enable the sample deposited in its sample receiving plate well to be connected by computerized means to its seed deposited on said receptacle.

16. A method according to any one of claims 11 to 13, wherein means for moving one or more samples from the receiver to the well are provided, said means being operated either manually after positioning the receiver and the well, or by electronic means once correct positioning has been achieved.

17. A method according to claim 1 or 2, wherein, after sample collection, the seeds are arranged on adhesive tape, preferably biodegradable tape, that is capable of allowing germination, at locations indexed to the samples collected therefrom, and, prior to cultivation, the seeds corresponding to the samples which have not passed the test are optionally removed.

18. A method according to any one of claims 1 to 17, wherein the seeds are placed in water for a time sufficient to soak them, preferably for about 4 to 6 hours, and then removal is carried out with the outline cutter.

19. The method according to claim 19, wherein, after collection, the seeds are dried, preferably at room temperature or in an oven, and stored pending sowing.

20. The method of claim 20, wherein the seeds are coated after drying.
